# DEMANDE DE BREVET EUROPEEN

(11) **EP 0 724 990 A1**
(43) Date de publication de la demande: **07.08.1996**
(21) Numéro de dépôt: 96101198.8
(22) Date de dépôt: 29.01.1996
(51) Int. Cl.: B60S 1/04

(54) **Essuie-glace pour véhicule automobile muni d'un manchon d'indexation au montage et de positionnement au repos**

(30) Priorité: 31.01.1995 FR 9501200
(71) Demandeur: VALEO SYSTEMES D'ESSUYAGE, 78321 La Verrière (FR)
(72) Inventeur: Morin, Pascal, F-86100 Chatellerault (FR)
(74) Mandataire: Gamonal, Didier

(57) **Abrégé**

L'invention propose un essuie-glace pour véhicule automobile du type comportant un balai d'essuie-glace plaqué sur une vitre à essuyer (14) par un bras d'essuie-glace (18) articulé sur une tête d'entraînement qui est montée sur un arbre d'entraînement en balayage alterné de l'essuie-glace, et du type comportant un manchon (30) monté sur le bras (18) d'essuie-glace qui, lorsque l'essuie-glace est en position de repos, coopère avec une face d'appui (66) d'une rampe (32) fixée sur le véhicule afin de soulever le bras d'essuie-glace (18) et de limiter la pression d'appui du balai d'essuie-glace sur la vitre, caractérisé en ce que le manchon (30) comporte un talon d'indexation (48) qui, pour le montage précis de l'essuie-glace sur le véhicule, coopère avec un bec (68) de la rampe (32).

## Description

La présente invention concerne un essuie-glace pour véhicule automobile.

L'invention concerne plus particulièrement un essuie-glace pour véhicule automobile du type comportant un balai d'essuie-glace plaqué sur une vitre à essuyer par un bras d'essuie-glace articulé sur une tête d'entraînement qui est montée sur un arbre d'entraînement en balayage alterné de l'essuie-glace, et du type comportant un manchon monté sur le bras d'essuie-glace qui, lorsque l'essuie-glace est en position de repos, coopère avec une face d'appui d'une rampe fixée sur le véhicule afin de soulever le bras d'essuie-glace et pour au moins limiter la pression d'appui du balai d'essuie-glace sur la vitre.

Lorsque l'essuie-glace est en position de repos, c'est-à-dire inactif, il n'est pas utile que la pression d'appui imposée par le bras de l'essuie-glace sur le balai d'essuie-glace soit importante.

En effet, cette pression d'appui, qui se prolonge dans le temps, est susceptible de déformer la raclette d'essuyage de manière irréversible et de provoquer un phénomène de collage de la raclette d'essuyage.

On connaît des dispositifs qui permettent de soulager la pression d'appui du balai lorsque l'essuie-glace est en position de repos.

Il est notamment connu d'utiliser à cette fin un manchon monté sur le bras d'essuie-glace qui coopère avec une rampe fixée sur le véhicule pour soulever légèrement le bras d'essuie-glace et réduire ainsi la pression d'appui du balai d'essuie-glace.

Toutefois, d'autres problèmes restent à résoudre.

En effet, on a remarqué qu'il était souhaitable de pouvoir empêcher le soulèvement du balai d'essuie-glace lorsque l'essuie-glace est inactif.

Cela est notamment nécessaire lorsque le véhicule est lavé dans un système de lavage automatique à rouleaux.

Par ailleurs, il a été remarqué que, lors du montage de l'essuie-glace sur l'axe d'entraînement du moteur de balayage, l'absence de repères précis entraînait une dispersion angulaire importante de la position angulaire des essuie-glaces d'un véhicule à l'autre.

L'invention a donc pour but de proposer un système qui permet de soulager la pression d'appui exercée par le bras d'essuie-glace sur le balai lorsque l'essuie-glace est en position de repos, qui permet le blocage de l'essuie-glace en position de repos et enfin qui permet l'indexation angulaire de l'essuie-glace lors de son montage sur le véhicule.

Dans ce but, l'invention propose un essuie-glace du type mentionné précédemment, caractérisé en ce que le manchon comporte un talon d'indexation qui, pour le montage précis de l'essuie-glace, coopère avec un bec de la rampe.

Selon d'autres caractéristiques de l'invention :
- le talon d'indexation du manchon comporte une surface d'indexation et une surface de décollement qui sont sensiblement perpendiculaires et qui coopèrent avec des surfaces complémentaires de butée du bec de la rampe, pour déterminer une position angulaire de montage de l'essuie-glace et pour décoller le balai d'essuie-glace de la vitre ;
- le talon d'indexation s'étend transversalement depuis une face latérale du manchon, en vis-à-vis de la rampe, et le bec s'étend transversalement depuis un bord longitudinal inférieur de la face d'appui de la rampe.
- le talon d'indexation est une plaque sur le chant de laquelle sont formées la surface d'indexation, sensiblement horizontale, et la surface de décollement, sensiblement verticale ;
- les surfaces de butée d'indexation et de décollement sont formées respectivement sur des faces supérieure et latérale du bec de la rampe ;
- le manchon coopère avec la rampe pour déterminer la position de repos de l'essuie-glace ;
- le manchon coopère avec la surface de butée d'indexation du bec de la rampe pour déterminer la position angulaire de repos de l'essuie-glace ;
- le manchon comporte un patin qui est formé en saillie oblique sur un bord longitudinal inférieur de la face latérale du manchon et qui coopère avec la face d'appui de la rampe pour réduire la pression du balai d'essuie-glace sur la vitre en position de repos de l'essuie-glace ;
- le manchon coopère avec la rampe pour éviter le décollement du balai d'essuie-glace lorsque l'essuie-glace est en position de repos ;
- le bec de la rampe comporte sur sa face supérieure de butée d'indexation une gorge longitudinale dans laquelle est reçue le patin du manchon lorsque l'essuie-glace est en position de repos, le patin étant susceptible de coopérer avec une face latérale de maintien de la gorge pour éviter le soulèvement intempestif du balai d'essuie-glace lorsque l'essuie-glace est en position de repos ;
- la position de montage de l'essuie-glace, définie par la coopération du talon d'indexation avec le bec, est décalée angulairement vers le bas par rapport à la position de repos définie par la coopération du manchon avec le bec, de manière que le talon d'indexation quitte automatiquement sa position de montage lors de première mise en service de l'essuie-glace ;
- le bras d'essuie-glace est composé d'un carter prolongé par une tige et le manchon est fixé sur le bras à la liaison de la tige sur le carter ;
- le manchon et la rampe sont des pièces moulées en matière plastique.

D'autres caractéristiques et avantages de l'invention apparaîtront à la lecture de la description détaillée qui suit pour la compréhension de laquelle on se reportera aux dessins annexés dans lesquels :
- La figure 1 est une vue en perspective qui illustre le montage d'un essuie-glace sur un véhicule automobile conformément aux enseignements de l'invention;
- les figures 2 et 3 sont des vues en perspective détaillée selon deux directions d'un manchon selon l'invention ;
- la figure 4 est une vue en perspective d'un manchon selon l'invention, monté sur un bras d'essuie-glace, et d'une rampe ;
- la figure 5 est une vue en section transversale partielle d'un manchon et d'une rampe selon l'invention représentés en position de montage précis de l'essuie-glace ;
- la figure 6 est une vue similaire à celle de la figure 5 sur laquelle la rampe et le manchon sont représentés en position de repos de l'essuie-glace.

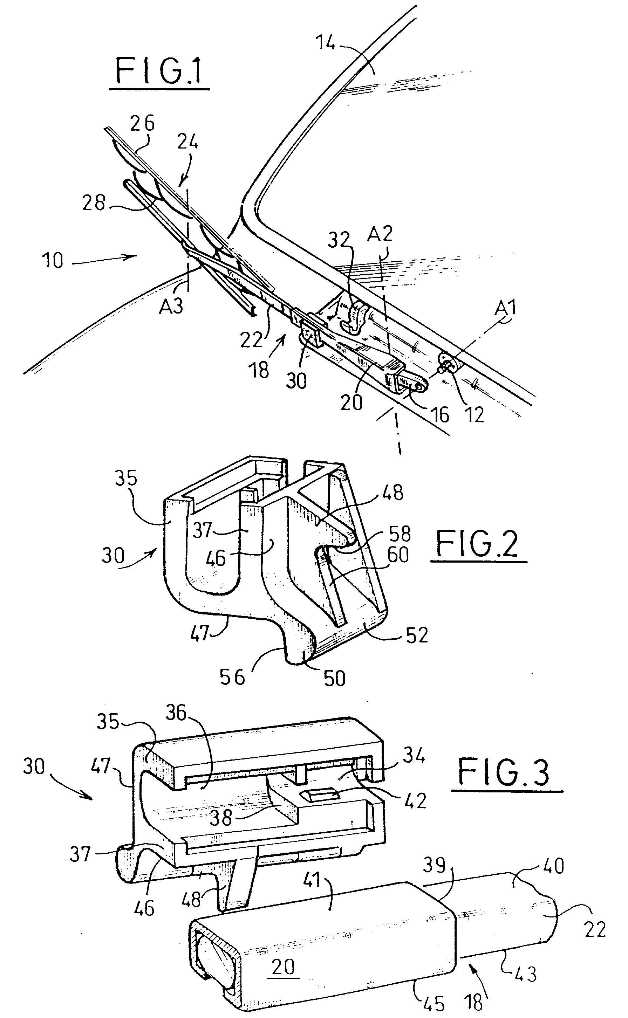

Sur la figure 1 est représenté un essuie-glace 10 avant son montage au bout d'un arbre d'entraînement 12.

L'essuie-glace 10 monté décrit un mouvement de balayage alterné d'axe A1 sensiblement perpendiculaire au plan du pare-brise 14.

L'essuie-glace 10 est monté sur l'arbre d'entraînement 12 par une tête d'entraînement 16 sur laquelle est articulé, autour d'un axe A2 perpendiculaire à l'axe A1, un bras d'essuie-glace 18 composé d'un carter 20 prolongé par une tige 22.

A l'extrémité libre de la tige 22 est articulé, autour d'un axe A3 sensiblement parallèle à A2, un balai d'essuie-glace 24 qui comporte une raclette d'essuyage 26 supportée par une structure 28.

Sur cette figure sont également représentés un manchon 30 monté sur le bras d'essuie-glace 18 et une rampe 32 montée sur le véhicule à la base du pare-brise 14.

Le manchon 30 est monté sur le bras d'essuie-glace au niveau de la liaison entre le carter 20 et la tige 22 de manière à masquer la discontinuité de forme à ce niveau.

Sur les figures 2 et 3 on a représenté en perspective un manchon 30 selon l'invention ainsi que la zone de liaison de la tige 22 sur le carter 20 d'un bras d'essuie-glace 18.

Le manchon 30 présente en section transversale une forme générale en U et il est destiné à envelopper le bras d'essuie-glace 18.

Comme représenté à la figure 3, le manchon 30 présente plus précisément deux cavités en U 34, 36 dont la dimension, en section, est différente pour recevoir respectivement la tige 22 et le carter 20.

Les deux cavités sont alignées longitudinalement et leur jonction délimite une surface transversale 38 qui coopère avec la face axiale d'extrémité 39 du carter 20 pour positionner axialement le manchon 30 sur le bras d'essuie-glace 18.

Le manchon 30 en U comporte deux ailes en vis-à-vis 35, 37 qui sont destinées à coopérer respectivement avec les faces supérieures 40, 41 et inférieures 43, 45 de la tige 22 et du carter 20.

L'aile 37 du manchon 30 comporte, sur sa face en vis-à-vis de la face inférieure 43 de la tige 22, un ergot 42 qui coopère avec un creux (non représenté) formé dans la face inférieure 43 de la tige 22 pour assurer le positionnement transversal et la fixation du manchon 30 sur la bras 18.

Le manchon 30 comporte une face latérale externe 46 formée sur l'aile 37, en vis-à-vis de la rampe 32, et une face inférieure 47 sensiblement perpendiculaire à la face latérale 46.

Sur cette face latérale 46 se trouvent un talon 48 et un patin 50.

Le patin 50 est formé en saillie oblique sur le bord inférieur longitudinal de la face latérale 46 du manchon 30.

On trouve, sur la partie extrême du patin 50, une zone de portée 52 sensiblement parallèle à la face latérale 46 et de profil cylindrique, et une zone de maintien 56 formée au dos de la zone de portée 52.

Le talon 48 est constitué d'une plaque perpendiculaire à la surface latérale 46 du manchon 30 et disposée sensiblement au centre celle-ci.

Le talon 48 présente un décrochement qui détermine deux surfaces sensiblement orthogonales 58, 60 sur le chant de la plaque.

Les surfaces d'indexation 58 et de décollement 60 sont respectivement sensiblement horizontale et verticale et forment entre elles un angle rentrant.

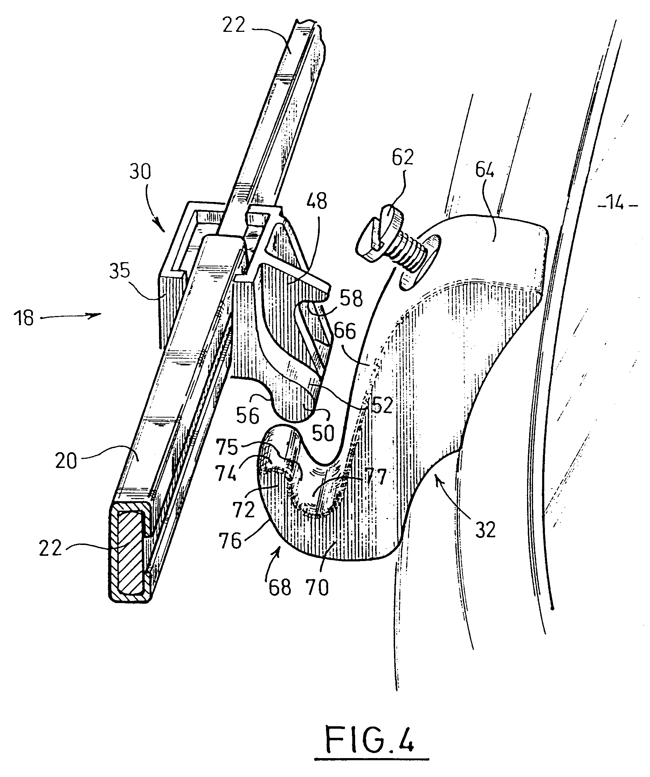

Comme représenté sur la figure 4, la rampe 32 est fixée sur la caisse du véhicule au bas du pare-brise, par une vis 62.

La face supérieure de la rampe 32 est constituée par un bord d'attaque 64 qui est incliné par rapport au plan du pare-brise.

Le bord d'attaque 64 est prolongé vers le bas par une face d'appui 66 sensiblement parallèle au plan du pare-brise mais décalée transversalement de celui-ci vers l'extérieur du véhicule.

La rampe 32 selon l'invention est munie à son extrémité inférieure d'un bec 68 qui présente, en section transversale, une forme de L dont la première branche 70, horizontale, s'étend perpendiculairement à la face d'appui 66 et dont la seconde branche 72 s'étend verticalement, en regard de la face d'appui 66 de la rampe 32, décalée transversalement de celle-ci vers l'extérieur du véhicule.

Les deux branches 70, 72 du bec 68 en L délimitent ainsi une gorge longitudinale 77 sur la face supérieure du bec 68.

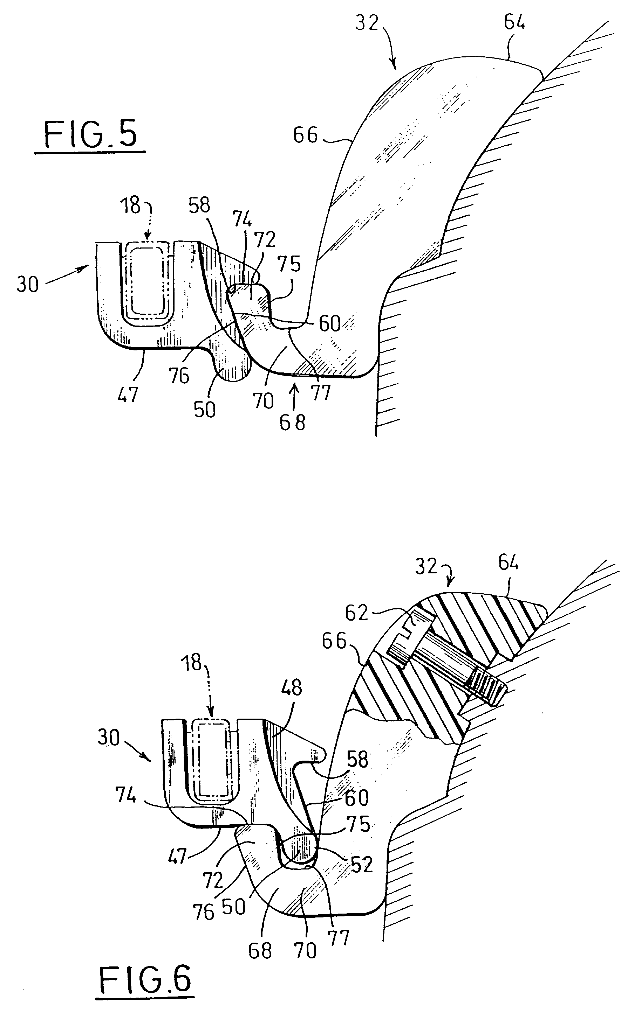

Sur la figure 5 est représentée en section axiale la position respective du manchon 30 et de la rampe 32 lorsque le talon 48 du manchon 30 coopère avec le bec 68 de la rampe 32 pour le montage précis de l'essuie-glace 10.

Le talon 48 est en contact avec la deuxième branche verticale 72 du bec 68.

Les surfaces d'indexation 58 et de décollement 60 du talon 48 coopèrent avec des surfaces de butée correspondantes 74, 76 de la deuxième branche 72 du bec 68 qui forment entre elles un angle saillant.

La figure 6 représente en section transversale le manchon 30 et la rampe 32 lorsque le patin 50 du manchon coopère avec la face d'appui 66 de la rampe 32.

L'essuie-glace est alors en position de repos.

La position angulaire de repos est déterminée par la coopération de la face inférieure 47 du manchon 30 avec la face supérieure 74 de la deuxième branche verticale 72 du bec 68.

Dans le même temps le patin 50 est en contact par sa zone de portée 52 sur la face d'appui 66 de la rampe 32 ce qui permet de décoller le bras d'essuie-glace 18 par rapport au plan du pare-brise 14 et par conséquent de réduire la pression que le bras d'essuie-glace 18 applique sur le balai d'essuie-glace.

On évite ainsi de trop déformer la raclette d'essuyage 26.

Par ailleurs, lorsque l'essuie-glace 10 est en position de repos, s'il est soumis à une force qui tend à soulever le balai du pare-brise, la zone de maintien 56 du patin 50 du manchon 30 entre en contact avec une face interne en vis-à-vis 75 de la seconde branche 72 du bec 68 ce qui empêche le soulèvement accidentel du balai d'essuie-glace 24.

Pour le montage de l'essuie-glace 10, l'opérateur, ou le robot, saisit le bras d'essuie-glace 18 et fait coopérer le talon d'indexation 48 du manchon 30 avec le bec 68 de la rampe 32.

Le bras 18 et le balai d'essuie-glace 24 sont alors nettement décalés du plan du pare-brise 14 ce qui permet de maintenir fermement le bras 18 d'essuie-glace. En effet, il y a alors suffisamment d'espace entre le bras d'essuie-glace 18 et le pare-brise 14 pour le passage des doigts de l'opérateur.

De plus, ce décalage permet d'aligner la tête d'entraînement 16 sur l'axe A1 de l'arbre d'entraînement 12, ce qui facilite l'engagement de la tête 16 sur l'arbre 12.

Une autre caractéristique de ce système d'indexation est qu'après le montage, on peut laisser l'essuie-glace dans la position représentée à figure 5.

En effet, lors de la première utilisation de l'essuie-glace, le manchon se déplace vers le haut en considérant la figure 5.

La surface de décollement 60 du talon 48 et la zone de portée 52 du patin glissent sur la deuxième branche 72 du bec 68 jusqu'à ce que, sous l'effet de la pression d'essuyage imposée par le bras d'essuie-glace 18, le patin 50, qui aura dépassé la surface supérieure 74 de la branche 72 du bec 68, retombe en contact avec la face d'appui 66 de la rampe 32 et glisse sur celle-ci.

A la fin de la première utilisation de l'essuie-glace, celui-ci retourne vers sa position de repos c'est-à-dire que l'essuie-glace avec le manchon 30 se déplacent du haut vers le bas en considérant la figure 4.

La zone de portée 52 du patin 50 entre en contact avec le plan incliné 64 de la rampe sur lequel elle monte. Puis, la zone de portée 52 suit la face d'appui 66 de la rampe jusqu'à ce que la face inférieure 47 du manchon 30 vienne en contact avec la face supérieure 74 de la branche 72 du bec 68.

On obtient ainsi grâce au manchon 30 selon l'invention une butée qui définit angulairement la position de repos de l'essuie-glace 10.

Sans sortir du cadre de l'invention, l'essuie-glace peut, en position de repos, être complètement décollé, c'est-à-dire que la lame d'essuyage de la raclette d'essuyage portée par le balai d'essuie-glace n'est plus alors en contact avec la surface en vis-à-vis du pare-brise ou de la caisse du véhicule.

## Revendications

1. Essuie-glace pour véhicule automobile du type comportant un balai d'essuie-glace (24) plaqué sur une vitre à essuyer (14) par un bras d'essuie-glace (18) articulé sur une tête d'entraînement (16) qui est montée sur un arbre d'entraînement (12) en balayage alterné de l'essuie-glace (10), et du type comportant un manchon (30) monté sur le bras d'essuie-glace (24) qui, lorsque l'essuie-glace (10) est en position de repos, coopère avec une face d'appui (66) d'une rampe (32) fixée sur le véhicule afin de soulever le bras d'essuie-glace (18) et au moins limiter la pression d'appui du balai d'essuie-glace (24) sur la vitre, caractérisé en ce que le manchon (30) comporte un talon d'indexation (48) qui, pour le montage précis de l'essuie-glace (10) sur le véhicule, coopère avec un bec (68) de la rampe (32).

2. Essuie-glace selon la revendication 1, caractérisé en ce que le talon d'indexation (48) du manchon (30) comporte une surface d'indexation (58) et une surface de décollement (60) qui sont sensiblement perpendiculaires et qui coopèrent avec des surfaces complémentaires de butée (74, 76) du bec (68) de la rampe (32), pour déterminer une position angulaire de montage de l'essuie-glace (10) et pour décoller le balai d'essuie-glace (24) de la vitre (14).

3. Essuie-glace selon la revendication 2, caractérisé en ce que le talon d'indexation (48) s'étend transversalement depuis une face latérale (46) du manchon (30), en vis-à-vis de la rampe (32), et le bec (68) s'étend transversalement depuis un bord longitudinal inférieur de la face d'appui (66) de la rampe (32).

4. Essuie-glace selon la revendication 3, caractérisé en ce que le talon d'indexation (48) est une plaque sur le chant de laquelle sont formées la surface d'indexation (58), sensiblement horizontale, et la surface de décollement (60), sensiblement verticale.

5. Essuie-glace selon la revendication 4, caractérisé en ce que les surfaces de butée d'indexation (74) et de décollement (76) sont formées respectivement sur des faces supérieure et latérale du bec (68) de la rampe (32).

6. Essuie-glace selon l'une quelconque des revendications précédentes, caractérisé en ce que le manchon (30) coopère avec la rampe (32) pour déterminer la position de repos de l'essuie-glace (10).

7. Essuie-glace selon la revendication 10 prise en combinaison avec l'une quelconque des revendications 2 à 5, caractérisé en ce que le manchon (30) coopère avec la surface de butée d'indexation (74) du bec (68) de la rampe (32) pour déterminer la position angulaire de repos de l'essuie-glace.

8. Essuie-glace selon la revendication 7, caractérisé en ce que le manchon (30) comporte un patin (50) qui est formé en saillie oblique sur un bord longitudinal inférieur de la face latérale (46) du manchon (30) et qui coopère avec la face d'appui (66) de la rampe (32) pour réduire la pression du balai d'essuie-glace (24) sur la vitre (14) en position de repos de l'essuie-glace.

9. Essuie-glace selon l'une quelconque des revendications précédentes, caractérisé en ce que le manchon (30) coopère avec la rampe (32) pour éviter le décollement du balai d'essuie-glace (24) lorsque l'essuie-glace (10) est en position de repos.

10. Essuie-glace selon la revendication 9 prise en combinaison avec la revendication 7, caractérisé en ce que le bec (68) de la rampe (32) comporte sur sa face supérieure de butée d'indexation (74) une gorge longitudinale dans laquelle est reçue le patin (50) du manchon (30) lorsque l'essuie-glace (10) est en position de repos, le patin étant susceptible de coopérer avec une face latérale de maintien (75) de la gorge pour éviter le soulèvement intempestif du balai d'essuie-glace (24) lorsque l'essuie-glace (10) est en position de repos.

11. Essuie-glace selon la revendication 10 caractérisé en ce que la position de montage de l'essuie-glace (10), définie par la coopération du talon d'indexation (48) avec le bec (68), est décalée angulairement vers le bas par rapport à la position de repos définie par la coopération du manchon (30) avec le bec (68), de manière que le talon d'indexation (48) quitte automatiquement sa position de montage lors de première mise en service de l'essuie-glace (10).

12. Essuie-glace selon l'une quelconque des caractéristiques précédentes, caractérisé en ce que le bras d'essuie-glace (18) est composé d'un carter (20) prolongé par une tige (22), et en ce que le manchon (30) est fixé sur le bras (18) à la liaison de la tige (22) sur le carter (20).

13. Essuie-glace selon l'une quelconque des revendications précédentes, caractérisé en ce que le manchon (30) et la rampe (32) sont des pièces moulées en matière plastique.
